Europäisches Patentamt

European Patent Office

Office européen des brevets

(11) Veröffentlichungsnummer: **0 322 855**
**A2**

## (12) EUROPÄISCHE PATENTANMELDUNG

(21) Anmeldenummer: 88121713.7

(22) Anmeldetag: 27.12.88

(51) Int. Cl.⁴: **F16K 41/10 , F16K 31/52**

(30) Priorität: 27.12.87 CS 9891/87

(43) Veröffentlichungstag der Anmeldung:
**05.07.89 Patentblatt 89/27**

(84) Benannte Vertragsstaaten:
**AT CH DE FR GB IT LI SE**

(71) Anmelder: **ZBROJOVKA BRNO, statni podnik**
**Lazaretni 1**
**Brno(CS)**

(72) Erfinder: **Blazek, Dalibor**
**Tyrsova 17**
**Vyskov(CS)**
Erfinder: **Hadra, Jiri**
**Tyrsova 17**
**Vyskov(CS)**

(74) Vertreter: **Patentanwälte Beetz sen. - Beetz
jun. Timpe - Siegfried - Schmitt-Fumian-
Mayr**
**Steinsdorfstrasse 10**
**D-8000 München 22(DE)**

(54) **Ventilanordnung.**

(57) Das Ventil hat einen Körper (1), der einerseits an eine Zuleitung (27) und andererseits an eine Ausgangsrohrleitung (31) angeschlossen ist. Im Körper (1) ist eine kreisförmige Ausnehmung (2) ausgebildet, in der ein elastisches Element (7) befestigt ist, in dem der doppelarmige Hebel (14) gelagert ist. Der innere Arm (15) des Hebels (14) greift in den Innenraum des Körpers (1) ein, während sein äußerer Arm (16) den Körper (1) überragt. Der innere Arm (15) ist mit einem inneren Mechanismus des Ventils verbunden, der innerhalb des Körpers (1) angeordnet ist. Der äußere Arm (16) kann mit einer Kröpfung in der Abhängigkeit auf der Anordnung und dem Betätigungsverfahren des inneren Ventilmechanismus versehen sein.

Die Erfindung ist bei Ventilen für die Verschließung oder die Regulierung des Durchflusses von flüssigen oder gasförmigen Medien anwendbar.

FIG. 2

## Ventilanordnung

Die Erfindung betrifft eine Ventilanordnung zur Dosierung von z. B. Wasser oder Dampf in Heizungssystemen.

Ventile zur Mengensteuerung von sowohl flüssigen als auch gasförmigen Medien müssen bei einfacher Konstruktion auch nach mehrjährigen Betriebszeiten die Dosiergenauigkeit beibehalten, um Energieverluste in Heizungssystemen zu vermeiden.

Bekannte Ventilkonstruktionen für Heizungssysteme weisen eine Betätigungsspindel und eine Stopfbuchse aus verschiedenen Werkstoffen auf, die einen Teil der Betätigungsspindel umspannen und eine Leckage verhindern. Statt einfacher Stopfbuchsen werden bei speziellen Ventilen auch gewellte Metallbälge eingesetzt, die den Ventilfunktionsraum von der Umgebung vollständig abtrennen. Derartige Metallbälge sind zwar äußerst zuverlässig und alterungsbeständig aber auch relativ teuer.

Bei herkömmlichen Stopfbuchsen ergeben sich dagegen Alterungsprobleme, die insbesondere durch die Temperaturwechsel in den Heizungssystemen gefördert werden und durch Verhärtung der Werkstoffe bzw. durch zunehmende Sprödigkeit zu Undichtigkeiten oder zu Blockierungen der Ventilspindel führen. Mit dem notwendigen Austausch der Armatur sind verschiedene Montageprobleme verbunden.

Aufgabe der Erfindung ist es, eine Ventilanordnung zu schaffen, die auch bei wechselnden Bedingungen über lange Zeiträume ohne Wartung funktionsfähig sind, und zwar bei einfacher Konstruktion und geringen Herstellungskosten.

Diese Aufgabe wird bei einer Ventilanordnung insbesondere für Heizungskörper erfindungsgemäß dadurch gelöst, daß in dem Körper die mit allgemeiner Gestalt versehene profilförmige Ausnehmung ausgebildet ist, in der dieser Gestalt entsprechendes elastisches Mittel befestigt ist, in dem der doppelumstoßbare Hebel gelagert ist, dessen innerer Arm in den Innenraum des Körpers eingreift, während dessen äußerer Arm den Körper überragt, wobei der innere Arm des doppelumstoßbaren Hebels mit dem inneren Mechanismus des Ventils verbunden ist, das innerhalb des Körpers angeordnet ist. Der äußere Arm des doppelumstoßbaren Hebels, welcher den Körper überragt, ist mit einer Kröpfung in der Abhängigkeit auf der Anordnung und dem Betätigungsverfahren des inneren Ventilmechanismus versehen.

Das elastische Mittel ist in seinem verlängerten Mittelteil, das einwärts des Körpers gerichtet ist, mit einem Dichtungsvorsprung versehen und der doppelumstoßbare Hebel ist in diesem elastischen Mittel auf einem Bolzen gelagert, wobei auf die Außenseite des elastischen Mittels die Unterlegscheibe aufliegt, welche in die in der Seitenwand der profilförmigen Ausnehmung ausgebildeten Rille einfällt und die Unterlegscheibe mit dem elastischen Mittel gegen die Ausschiebung aus der profilförmigen Ausnehmung durch die Kreissicherung sichergestellt sind, welche zum Beispiel mit einem Bajonettverschluß versehen ist und welche ebenfalls in die Rille einfällt. Der innere Ventilmechanismus, zum Beispiel ein Regulationsmechanismus, ist durch eine Zugstange gebildet, welche in Richtung der Längsachse des Körpers gelagert ist und welche auf einer Seite mit dem inneren Arm des doppelumstoßbaren Hebels und auf der anderen Seite mit dem gegen den Sitz untergebrachten Schließkegel verbunden ist, wobei der Schließkegel von dem Sitz durch die Spreizfeder abgedrückt wird, die zwischen dem Schließkegel und dem gegenüberliegenden Vorsprung des Sitzes gelagert ist. Der innere Ventilmechanismus, zum Beispiel ein Verschließungsmechanismus, ist durch die Nadel gebildet, welche in dem Schließkegel gelagert ist und sich auf dem inneren Arm des doppelumstoßbaren Hebels abstützt, wo der Schließkegel auf den Sitz mittels der Spreizfeder anliegt, die zwischen ihm und dem gegenüberliegenden Ring gelagert ist, der in der Innenseite des Körpers befestigt ist.

Ein Vorteil der Erfindung liegt vor allem in der Abtrennung des inneren Raumes von dem äußeren Raum durch die elastische Dichtung ohne gegeneinander bewegbare Bestandteile. Diese Anordnung gewährleistet eine leichte Betätigung der Ventilkegel und die praktisch unbegrenzte Lebensdauer der Dichtung, welche z. B. aus Silikongummi bestehen kann. Weiter stellt sie auch die dauerhafte und absolute Dichtheit des Ventils sicher, was den wesentlichen Beitrag darstellt. Außerdem bringt die präzise Verstellung der Kegel ohne meßbare Hysteresis eine konstante Kraft zur Ventilbetätigung und eine augenblickliche funktionsbereitschaft auch nach langfristigen Außerbetriebszeiten, z. B. im Sommer. Der eigene Ventilkörper, in welchem die elastische Dichtung und die mitarbeitende Einrichtung gelagert sind, besteht aus einem gegossenen Profilrohr, das durch einfache Bearbeitung hergestellt wird und keine arbeitsaufwendigen und kostspieligen Schmiedearbeiten erfordert.

Weitere Vorteile und Besonderheiten der Erfindung sind der folgenden Beschreibung von Ausführungsbeispielen der Erfindung anhand der Zeichnung entnehmbar. Es zeigen:

Fig. 1 die Lagerung des elastischen Mittels im Ventilkörper,

Fig. 2 den Betätigungsmechanismus in einem Regulierventil,

Fig. 3 den Betätigungsmechanismus in einem Absperrventil.

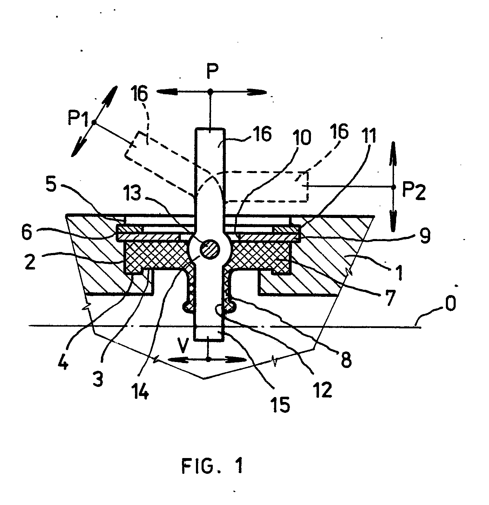

In einem Ventilkörper 1, der ein einfaches Profilrohr sein kann, ist seitlich eine Ausnehmung 2 ausgebildet, die im gegebenen Falle kreisförmig ist und im Boden 3 eine kreisrunde Vertiefung 4 hat. In der Seitenwand 5 der Ausnehmung 2 ist eine Ringnut 6 ausgebildet. In der Ausnehmung 2 und der Vertiefung 4 ist ein ihnen entsprechendes elastisches Element 7 aus z. B. Silikongummi befestigt, das in seinem Mittelteil einen nach einwärts gerichteten Hals 8 mit einem abdichtenden Endwulst aufweist. An der Außenseite des elastischen Elements 7 ist eine Unterlegscheibe 9 angeordnet, welche eine Zentralöffnung 10 aufweist und in der Ringnut 6 der Ausnehmung 2 festgelegt ist. Gegen Herausfallen sind die Unterlegscheibe 9 und das elastische Mittel 7 durch einen Sicherungsring 11 gesichert, der in der Ringnut 6, z. B. durch einen Bajonettverschluß festgelegt ist. Die Befestigung des elastischen Elements 7 in der Ausnehmung 2 kann auch durch andere geeignete Einrichtungen erfolgen. Durch den Mittelteil des elastischen Elements 7 erstreckt sich eine Öffnung 12, in welcher auf einen Bolzen 13 ein doppelumstoßbarer Hebel 14 gelagert ist. Dieser Hebel 14 greift mit seinem inneren Arm 15 in den Innenraum des Körpers 1 ein und ragt mit seinem zweiten Arm 16 aus dem Körper 1 heraus. Der äußere Arm 16 dieses Hebels 14 kann je nach dem Anwendungszweck oder Betätigungsverfahren geformt sein, und zwar in der in Fig. 1 dargestellten Weise abgebogen oder gekröpft sein. Zweckmäßig wird die Kröpfung in Richtung der Längsachse 0 des Körpers 1 durchgeführt. Am äußeren Arm 16 greift eine Betätigungsstange 17 der in Fig. 1 nicht dargestellten Regulationseinrichtung an.

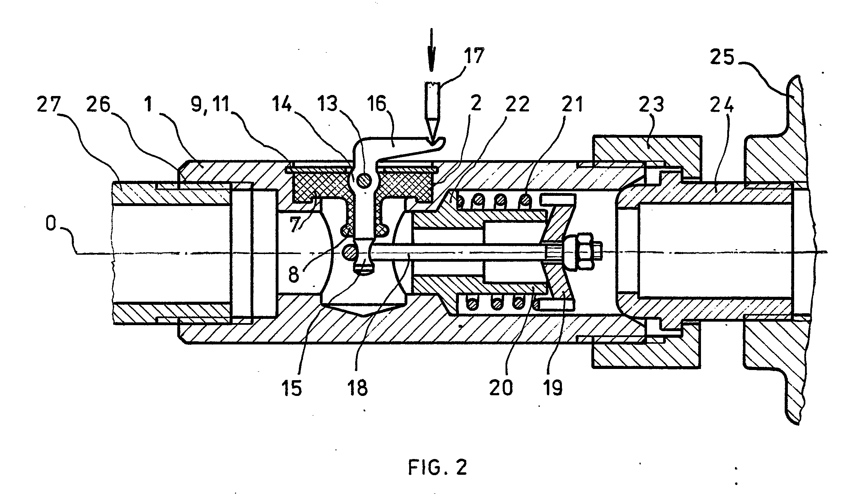

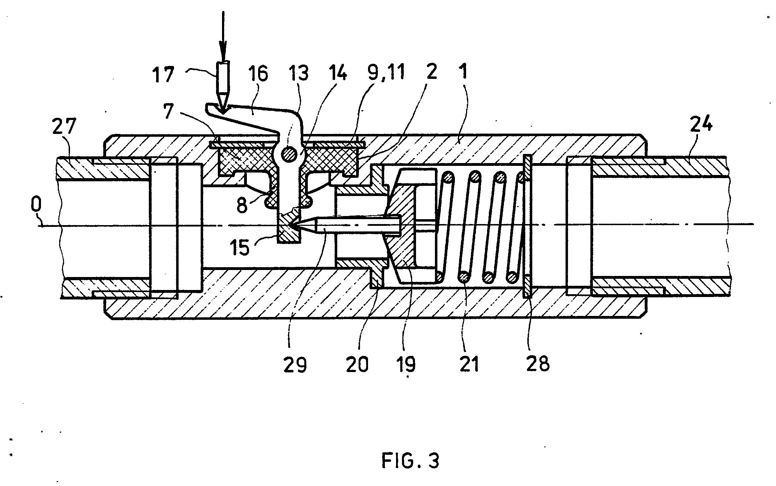

Die vorstehend beschriebene Anordnung wird von einem Mechanismus betätigt, welcher im Körper 1 untergebracht und in den Fig. 2 bzw. 3 dargestellt ist. Bei einem Dosierventil nach Fig. 2 ist eine Zugstange 18 in der Längsachse 0 des Körpers 1 verschiebbar gelagert, welche mit einem Ende am inneren Arm 15 des Hebels 14 angreift und mit dem zweiten Ende mit einem gegen ein hohlzylindrisches Sitzglied 20 drückenden Schließkegel 19 verbunden ist. Der Schließkegel 19 ist durch die Spreizfeder 21 vorgespannt, welche zwischen dem Außenrand des Schließkegels und einem Ringbund 22 am Sitzglied 20 angeordnet ist.

Der Körper 1 ist durch eine Überwurfmutter 23 an eine Ausgangsrohrleitung 24 angeschlossen, die z. B. zu einem Heizungskörper 25 führt. Auf der Gegenseite ist der Körper 1 mittels einer Schraubenverbindung 26 mit einer Zuleitung 27 verbunden.

den.

Der Betätigungsmechanismus für das in Fig. 3 dargestellte Absperrventil ist ähnlich ausgebildet. An dem Sitzglied 20 stützt sich der Schließkegel 19 durch die Einwirkung der Spreizfeder 21 ab, welche zwischen einem Ende des Schließkegels 19 und einem in der Innenwand des Körpers 1 befestigten Ring 28 angeordnet ist. Im Schließkegel 19 ist eine Nadel 29 gelagert, welche sich auf dem inneren Arm 15 des Hebels 14 abstützt. Auch hier ist der Körper 1 an einer Seite an die Zuleitung 27 und an der anderen Seite an die Ausgangsrohrleitung 24 angeschlossen.

Die Wirkung des Ventils ist auf der Bewegung des Hebels 14 in dem elastischen Mittel 7 gegründet, welcher sich in den dargestellten Fällen in Richtung der Längsachse 0 des Körpers 1 bewegt. Je nach dem Zweck und der Ausgestaltung des Ventilmechanismus bei wechselwarmen Medien kann der Hebel 14 auch in anderen Richtungen, praktisch in dem ganzen Kreis von 360° bewegt werden. Jede der Bewegungen des äußeren Armes 16 des Hebels 14, welche in Fig. 1 dargestellt und mit den Doppelpfeilen P, $P_1$ und $P_2$ bezeichnet sind, bewirkt eine Schwenkbewegung des inneren Armes 15 um die gleiche Größe V in Richtung der Längsachse 0 des Körpers 1. Wenn in der betreffenden Richtung auf den äußeren Arm 16 gedrückt wird, verformt sich der zugehörige Teil des elastischen Elements 7, und zwar um den Bereich der zentralen Manschette. Die Dichtheit im Bereich der Ausnehmung 2 bleibt dabei erhalten, so daß weder dampfförmiges noch flüssiges Medium aus dem inneren Raum des Körpers 1 entweichen kann.

Durch die beschriebene Verstellung des Hebels 14 weren die inneren Mechanismen des Regulierventils nach Fig. 2 oder des Absperrventils nach Fig. 3 betätigt.

Bei dem Regulierventil wird der Schließkegel 19 von der Zugstange 18 gegen die Einwirkung der Spreizfeder 21 gegen das hohle Sitzelement 20 gedrückt. Durch Verstellen des inneren Armes 15 des Hebels 14 gibt die Zugstange 18 den Schließkegel 19 frei, so daß die Menge des über das Sitzelement 20 in den Heizungskörper 25 fließenden Heizmediums gesteuert wird.

Bei dem Absperrventil drückt die Spreizfeder 21 den Schließkegel 19 an das Sitzelement 20 an. Durch die Nadel 29 wird bei einer Verstellung des inneren Armes 15 der Schließkegel 19 umgestellt, wodurch ein Medium, z. B. Wasser, von der Zuleitung 27 in die Ausgangsrohrleitung 24 zum Verbraucher fließen kann.

In allen Anwendungsfällen der Ventile kann die Umstellung des äußeren Armes 16 des doppelarmigen Hebels 14 entweder durch die Bedienung oder automatisch, z. B. mittels eines Thermostates, durchgeführt und über einen geeigneten Reguliermechanismus, z. B. die Betätigungsstange 17 auf das Ventilglied 19, 20 übertragen werden.

Die Erfindung ist allgemein bei Ventilen für die Verschließung oder die Regulierung des Durchflusses von flüssigen oder gasförmigen Medien anwendbar.

<div align="center">

LISTE
der angewandten Bezugszeichen

</div>

1 Körper
2 Ausnehmung
3 Boden
4 Vertiefung
5 Seitenwand
6 Ringnut
7 elastisches Element
8 Dichtungsmanschette
9 Unterlegscheibe
10 Zentralöffnung
11 Sicherungsscheibe
12 Öffnung
13 Bolzen
14 doppelarmiger Hebel
15 innerer Arm
16 äußerer Arm
17 Betätigungsstange
18 Zugstange
19 Schließkegel
20 Sitzelement
21 Spreizfeder
22 Ringbund
23 Überwurfmutter
24 Ausgangsrohrleitung
25 Heizungskörper
26 Schraubenverbindung
27 Zuleitung
28 Ring
29 Nadel
O Längsachse
P Bewegung
P1 Bewegung
P2 Bewegung
V Größe

**Ansprüche**

1. Ventil, insbesondere für Heizungskörper, dessen Körper auf einer Seite an eine Zuleitung und auf der anderen Seite an eine Ausgangsrohrleitung angeschlossen ist und ein gegenüber einem Sitzelement bewegbares Ventilglied aufweist, **dadurch gekennzeichnet,** daß in einer seitlichen Ausnehmung (2) des Ventilkörpers (1) ein elastisches Element (7) befestigt ist, in dem ein doppelarmiger Hebel (14) gelagert ist, dessen äußerer Arm (16) den Körper (1) überragt und dessen in den Innenraum des Körpers (1) eingreifender innerer Arm (15) mit einem Mechanismus zur Betätigung des Ventilglieds (19) verbunden ist.

2. Ventil nach Anspruch 1,
**dadurch gekennzeichnet,**
daß der äußere Arm (16) des Hebels (14) abgekröpft ist.

3. Ventil nach Anspruch 1 oder 2,
**dadurch gekennzeichnet,**
daß das elastische Element (7) in seinem Mittelteil eine mit einem Dichtungswulst versehene Manschette (8) aufweist, die den inneren Arm (15) des auf einem Bolzen (13) gelagerten Hebels (14) umschließt, und daß das elastische scheibenförmige Element (7) an einer Unterlegscheibe (9) anliegt, welche in einer in der Seitenwand (5) der profilförmigen Ausnehmung (2) ausgebildeten Ringnut (6) zusammen mit einem Sicherungsring (11) festgelegt ist.

4. Ventil nach einem der Ansprüche 1 bis 3,
**dadurch gekennzeichnet,**
daß ein innerer Betätigungsmechanismus eine in der Längsachse (0) des Körpers (1) gelagerte Zugstange (18) aufweist, welche mit einem Ende am inneren Arm (15) des Hebels (14) angreift und mit dem anderen Ende mit einem gegen ein Sitzelement (20) angedrückten Schließkegel (19) verbunden ist, wobei der Schließkegel (19) vom Sitzelement (20) durch eine Spreizfeder (21) abgedrückt wird, die zwischen dem Schließkegel (19) und einem Ringbund des Sitzelements (20) gelagert ist.

5. Ventil nach einem der Ansprüche 1 bis 3,
**dadurch gekennzeichnet,**
daß ein innerer Betätigungsmechanismus eine in einem Schließkegel (19) abgestützte Nadel (29) aufweist, deren Spitze am inneren Arm (15) des Hebels (14) angreift und daß der Schließkegel (19) von einer Spreizfeder (21) auf den Sitz (20) gedrückt wird, die zwischen ihm und einem in der Innenwand des Körpers (1) befestigten Ring (28) eingespannt ist.

FIG. 1

FIG. 2

FIG. 3